# FASCICULE DE BREVET EUROPEEN

(11) **EP 1 367 033 B1**
(45) Date de publication et mention de la délivrance du brevet: **24.01.2007**
(21) Numéro de dépôt: 02447096.5
(22) Date de dépôt: 27.05.2002
(51) Int. Cl.: C04B 14/06, C04B 20/02, C04B 18/16

(54) **Ciment comprenant un fillre et un procédé de fabrication de celui-ci**
Füllstoff enthaltender Zement und Verfahren zu seiner Herstellung
Filler containing cement and process for making this filler

(43) Date de publication de la demande: 03.12.2003
(73) Titulaire: Kreusch, Wilhelm, 4700 Eupen (BE)
(72) Inventeur: Kreusch, Wilhelm, 4700 Eupen (BE)
(74) Mandataire: Van Malderen, Michel

(56) Documents cités:
- DE-A- 2 134 232
- DE-B- 1 236 915
- GB-A- 2 276 875
- US-A- 4 407 677
- H.MAEKAWA ET AL.: "Taiheiyo closes the loop with Ecocement" GLOBAL CEMENT & LIME MAGAZINE, ENVIRONMENTAL SPECIAL ISSUE 2002, [en ligne] pages 23-26, XP002221141 PRo Publications International Ltd Extrait de l'Internet: <URL:http://www.propubs.com/environment/> [extrait le 2002-11-15]

## Description

### Objet de l'invention

La présente invention se rapporte à un ciment comprenant un filler particulier et à un procédé de fabrication dudit filler de ciment à partir de craie ou de limon de carrière.

### Etat de la technique

Pour fabriquer du ciment, il est nécessaire de réunir quatre éléments principaux selon des dosages préétablis : chaux, silice, alumine et oxyde de fer. L'élément prépondérant est le calcaire ou la craie.

L'ensemble de ces éléments, appelé cru, est traité en installations procédant par voie humide ou voie sèche.

Dans le procédé de fabrication du ciment selon la voie humide, le cru est broyé et malaxé avec de l'eau pour constituer une pâte liquide qui est homogénéisée et stockée dans des cuves. Cette pâte est ensuite introduite dans la partie supérieure du four rotatif des cimenteries.

Dans la voie sèche, le cru est généralement séché et broyé, il est ensuite homogénéisé en silos et introduit sous forme pulvérulente dans une tour de préchauffage où la décarbonatation se déroule partiellement avant d'entrer dans le four rotatif proprement dit. La voie sèche est aujourd'hui généralement privilégiée pour des raisons énergétiques.

La première étape du procédé de fabrication du ciment est la cuisson. Elle s'opère dans des fours rotatifs légèrement inclinés et dont la rotation permet d'acheminer progressivement le cru vers la flamme du four qui produit une température d'environ 2000°C. Celle-ci provoque une réaction physico-chimique des différents oxydes appelés clinkerisation qui débute vers 1450°C.

Ces grains de clinker seront ensuite additivés et mélangés notamment à des fillers et ensuite broyés lors d'une étape de broyage avant d'arriver au produit fini qui est le ciment.

L'utilisation de combustibles de substitution dans les fours enrichit les gaz de fumée de cimenterie avec des éléments indésirables tels que le chlore et le soufre notamment, causant entre autre des problèmes de corrosion au niveau des installations.

La mise en place d'un système de by-pass permet cependant de récupérer une partie des gaz chauds encore appelés gaz de purge avec pour but de soutirer par le biais de celui-ci le chlore et le soufre en les concentrant dans des « poussières de purge » généralement récupérées à l'aide de filtres électrostatiques. Ces poussières de purge peuvent contenir des concentrations de chlorures pouvant aller jusqu'à 50.000ppm, ce qui pose un réel problème environnemental quant à leur élimination.

Les procédés de fabrication actuels par voie sèche, peuvent seulement utiliser une petite quantité de poussière de by-pass qui est ajoutée au clinker, et ce afin de ne pas dépasser un taux de chlorures de 1000 ppm qui correspond aujourd'hui à la limite maximale admissible et normalisée dans le ciment.

Il existe donc actuellement une quantité importante de poussière de by-pass hautement chargée en chlorures, inutilisable et devant être entreposée ou déchargée dans les carrières des cimenteries ou de leurs dépendances. Ce qui pose un réel problème de gestion de l'environnement.

La société japonaise Taiheyo a publié dans son journal *Environmental Spécial Issue 2002* une méthode de lavage des poussières de purge par laquelle celles-ci sont transformées en barbotine qui, après déshydratation mécanique, est quasiment exempte de chlore qui se retrouve dans le filtrat. Celui-ci est neutralisé par du CO₂ en provenance des gaz chauds de la cheminée du four de cimenterie. Il s'agit cependant là d'un procédé relativement complexe et cher à utiliser. Il ne résout pas non plus le problème de la craie ou du limon contenant un taux de carbonate supérieur à 50% et ayant un taux d'humidité trop élevé pour être utilisé en tant que filler lors du broyage du clinker.

La présente invention porte essentiellement sur un filler et un procédé de fabrication de celui-ci comprenant les poussières de purge contaminées et utilisables lors du broyage du clinker en vue de la réutilisation desdites poussières dans le ciment.

### Buts de l'invention

La présente invention décrit un ciment préparé avec un filler, lui-même préparé à partir d'une craie et/ou d'un limon modifié provenant directement de la carrière. Elle permet de résoudre le problème de la réutilisation des poussières de purge contaminées avec des éléments indésirables du four tout en fournissant un filler suffisamment sec pour être utilisable lors de l'étape de mouture du clinker.

### Résumé de l'invention

La présente invention présente un ciment fabriqué à partir de clinker broyé comprenant un filler, caractérisé en ce que ledit filler comprend 3 à 25 % en poids de poussières de purge provenant du by-pass du four rotatif de la cimenterie comprenant des éléments indésirables tels que chlorures et/ou sulfates et 75 à 97 % en poids d'un mélange de craie et/ou de limon.

Un élément clé de la présente invention est que ladite poussière de purge a été préalablement saupoudrée sur lesdites craies et/ou limons entraînant un processus de séchage du mélange résultant d'une réaction exothermique entre les chlorures et les carbonates.

Avantageusement, le clinker broyé et additivé selon la présente invention comprend moins de 1000 p.p.m de chlorures dans le produit fini, c'est à dire le ciment.

Un objectif supplémentaire de la présente invention est de proposer un procédé de fabrication d'un filler de ciment caractérisé en ce que du limon et/ou de la craie provenant d'une carrière est saupoudré par 3 à 25% en poids de poussières de purge issues du by-pass du four de cimenterie et entreposées dans un silo de stockage, avant d'être dosées à travers une unité de dosage et mélangées dans un mélangeur entraînant une réaction de séchage dudit limon et/ou de ladite craie pour les rendre utilisables en tant que fillers dans l'étape d'ajout et de broyage du clinker.

Toujours selon l'invention, la poussière de purge est ajoutée simultanément ou non avec le limon et/ou la craie dans le mélangeur.

Enfin, la présente invention divulgue l'utilisation de poussières de purge d'un four de cimenterie comprenant des éléments indésirables tels que les chlorures et les sulfates, et de craie et/ou limon pour la fabrication d'un filler ajouté lors du broyage du clinker de ciment.

### Brève description des figures

La figure 1 représente un schéma de fabrication de ciment en voie humide et en voie sèche, dont la légende explicative est indiquée ci-après.

La figure 2 représente le schéma du procédé selon la présente invention.

### Description détaillée de l'invention

Comme évoqué précédemment, les principaux constituants du clinker sont le tuffeau, la marne, le limon, le calcaire ou la craie. Le limon et/ou la craie de carrière sont de compositions variables et contiennent généralement, selon leur origine, plus de 50% de carbonate de calcium. Leur teneur élevée en eau ne permet généralement pas leur utilisation dans un procédé de mélange et/ou de broyage. Cette craie, en tant que matière première, contient environ 20% d'humidité alors que l'utilisation d'un filler lors de l'étape de broyage et d'ajouts d'additifs 10,11 du clinker nécessite un taux d'humidité inférieur à 5 ou 6%.

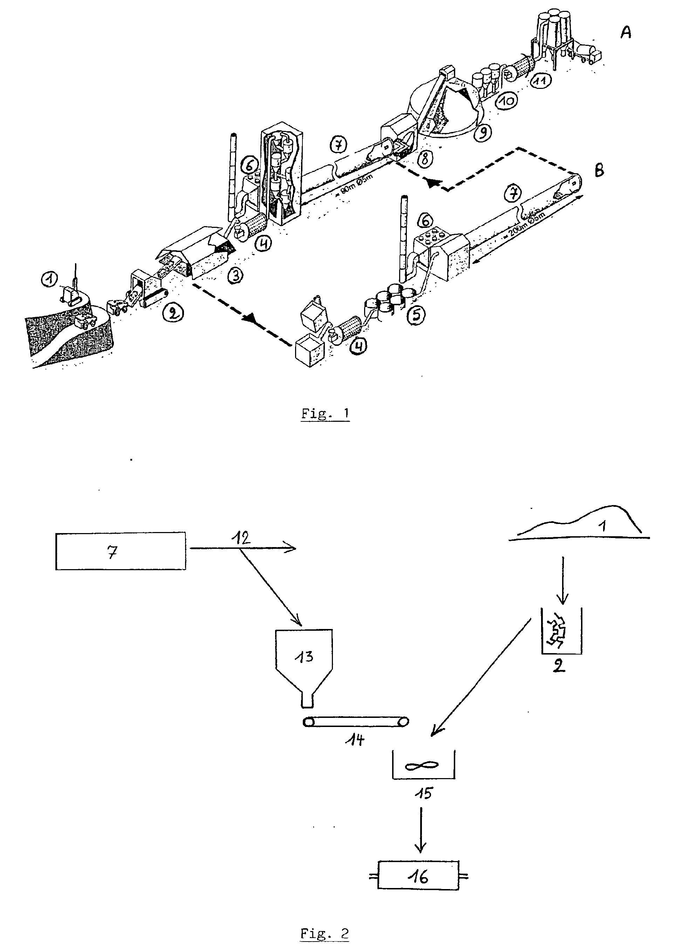

La présente invention divulgue un moyen d'utiliser des poussières de production du clinker obtenues par un by-pass 12, figure 2, sur le four 7 et hautement contaminées en chlorures. Celles-ci sont saupoudrées sur une craie blanche et/ou limon de carrière qui est constituée essentiellement de carbonates de calcium entraînant un processus de prise exothermique afin d'en faire un filler utilisable comme ajout 10 avant l'étape de broyage 11.

Ce filler sera constitué d'environ 75 à 97% de craie et /ou de limon provenant de la carrière et de 3 à 25% de poussière de purge provenant du by-pass du four de la cimenterie. Ces poussières sont contaminées par des combustibles de substitution contenant notamment des chlorures dont les concentrations peuvent aller jusqu'à 50.000 ppm et des sulfates dont la concentration peut aller jusqu'à 20.000 ppm.

La craie et/ou le limon qui était auparavant un produit non-manipulable ou stockable parce qu'il contenait un taux d'humidité trop élevé et par conséquent était trop collant pour être utilisé en tant que filler dans l'étape de broyage du clinker devient maintenant utilisable grâce à l'ajout et à la réaction de prise des poussières de purge provenant du by-pass du four 12.

Dans la mesure où le tonnage de craie utilisée pour l'étape de broyage du clinker est extrêmement élevé, on peut utiliser une grande quantité de poussières de purge provenant du by-pass du four 12 sans dépasser la teneur moyenne admissible en chlorures dans le ciment, ce qui permet de valoriser lesdites poussières.

Les teneurs de ces mêmes éléments dans le ciment sont réglementées et normalisées différemment selon les pays. Le dosage des poussières de purge se fera donc en fonction des seuils à ne pas dépasser dans les pays concernés.

### Légende des deux figures

- **A**: voie sèche
- **B**: voie humide
- **1**: carrière
- **2**: concassage
- **3**: préhomogénéisation
- **4**: broyage
- **5**: délayage et homogénéisation
- **6**: filtre
- **7**: four rotatif
- **8**: refroidisseur
- **9**: stockage clinker
- **10**: ajouts d'additifs
- **11**: broyage ciment
- **12**: By-pass permettant d'obtenir des poussières de purge
- **13**: Silo de stockage des poussières contenant des éléments indésirables
- **14**: Unité de dosage
- **15**: Mélangeur
- **16**: Broyage du clinker

## Revendications

1. Ciment fabriqué à partir de clinker broyé comprenant un filler, **caractérisé en ce que** ledit filler comprend 3 à 25 % en poids de poussières de purge provenant du by-pass (12) du four rotatif de la cimenterie (7) comprenant des éléments indésirables tels que chlorures et/ou sulfates et 75 à 97 % en poids d'un mélange de craie et/ou de limon.

2. Ciment selon la revendication 1 **caractérisé en ce que** ladite poussière de purge a été préalablement saupoudrée sur lesdites craies et/ou limons entraînant un processus de séchage du mélange résultant d'une réaction exothermique entre les chlorures et les carbonates.

3. Ciment selon la revendication 1 **caractérisé en ce que** ledit clinker broyé et additivé comprend moins de 1000 p.p.m de chlorures dans le produit fini.

4. Procédé de fabrication d'un filler de ciment **caractérisé en ce que** du limon et/ou de la craie provenant d'une carrière est saupoudré par 3 à 25% en poids de poussières de purge issues du by-pass (12) du four de cimenterie (7) et entreposées dans un silo de stockage (13), avant d'être dosées à travers une unité de dosage (14) et mélangées dans un mélangeur (15) entraînant une réaction de séchage dudit limon et/ou de ladite craie pour les rendre utilisables en tant que fillers dans l'étape d'ajout et de broyage du clinker.

5. Procédé selon la revendication 4 **caractérisé en ce que** la poussière de purge est ajoutée simultanément ou non avec le limon et/ou la craie dans le mélangeur.

6. Utilisation de poussières de purge d'un four de cimenterie comprenant des éléments indésirables et de craie et/ou limon pour la fabrication d'un filler ajouté lors du broyage du clinker de ciment.

## Claims

1. Cement manufactured from crushed clinker comprising a filler, **characterised in that** said filler comprises 3 to 25% by weight of purge dust coming from the bypass (12) of the rotary oven (7) of the cement works and comprising undesirable elements such as chlorides and/or sulphates and 75 to 97% by weight of a mixture of chalk and/or silt.

2. Cement according to Claim 1, **characterised in that** said purge dust has been sprinkled in advance over said chalks and/or silts, causing the drying of the mixture due to an exothermic reaction between the chlorides and the carbonates.

3. Cement according to Claim 1, **characterised in that** said crushed and additived clinker comprises less than 1, 000ppm of chlorides in the finished product.

4. Method for manufacturing a cement filler, **characterised in that** chalk and/or silt coming from a quarry is sprinkled at 3 to 25% by weight of purge dust coming from the bypass (12) of the oven (7) of the cement works and stored in a storage silo (13), before being proportioned in measured doses through a measuring unit (14) and mixed in a mixer (15), causing a drying reaction of said silt and/or said chalk so as to make them usable as fillers in the addition and crushing stage of the clinker.

5. Method according to Claim 4, **characterised in that** the purge dust is added in the mixer simultaneously or not with the silt and/or chalk.

6. Use of purge dust from a cement works oven comprising undesirable elements and chalk and/or silt for manufacturing a filler added during the crushing of the cement clinker.

## Patentansprüche

1. Zement, der aus gemahlenem Klinker hergestellt wird und einen Füller enthält, **dadurch gekennzeichnet, dass** der besagte Füller zwischen 3 und 25 Gewichtsprozent abgeschiedene Stäube aus der Entstaubung, die aus dem Bypass (12) des Drehofens des Zementwerks (7) kommen und nicht gewünschte Bestandteile wie Chloride und/oder Sulfate enthalten, und 75 - 97 Gewichtsprozent einer Kreide- und/oder Schluffmischung enthält.

2. Zement nach Anspruch 1, **dadurch gekennzeichnet, dass** der besagte abgeschiedene Staub zuvor auf die besagten Kreiden und/oder Schluffe gestreut wird, was zu einem Trocknungsprozess der Mischung führt, die aus einer exothermen Reaktion zwischen den Chloriden und den Karbonaten resultiert.

3. Zement nach Anspruch 1, **dadurch gekennzeichnet, dass** der besagte gemahlene und mit Zusätzen versehene Klinker weniger als 1000 ppm Chloride im fertigen Produkt enthält.

4. Herstellungsverfahren für einen Zementfüller, **dadurch gekennzeichnet, dass** Schluff und/oder Kreide aus einem Steinbruch mit 3 bis 25 Gewichtsprozent abgeschiedenen Stäuben aus dem Bypass (12) des Drehofens des Zementwerks (7), die in einem Lagersilo (13) zwischengelagert werden, bevor sie in einer Dosiereinheit (14) dosiert und in einem Mischwerk (15) gemischt werden, bestreut wird; diese Stäube rufen eine Trocknungsreaktion des besagten Schluffs und/oder der besagten Kreide hervor, um sie als Füller in der Zugabephase und Zerkleinerungsphase des Klinkers verwendbar zu machen.

5. Verfahren nach Anspruch 4, **dadurch gekennzeichnet, dass** der abgeschiedene Staube gleichzeitig mit dem Schluff und/oder der Kreide in das Mischwerk gegeben wird oder auch nicht.

6. Verwendung der abgeschiedenen Stäube eines Zementofens mit nicht gewünschten Bestandteilen und von Kreide und/oder Schluff zur Herstellung eines Füllers, der während des Mahlens des Zementklinkers zu diesem hinzufügt wird.
